# EUROPEAN PATENT APPLICATION

(11) **EP 2 103 544 A1**
(43) Date of publication of application: **23.09.2009**
(21) Application number: 08167959.9
(22) Date of filing: 30.10.2008
(51) Int. Cl.: B65D 71/00, G06K 7/00, G06K 7/08, G06K 19/07, G06K 19/077, H04B 7/15

(54) **Packaging box, packaging material, tag ID reading method and tag ID transmitting program**

(30) Priority: 21.03.2008 JP 2008073551
(71) Applicant: Fujitsu Limited, Kawasaki-shi, Kanagawa 211-8588 (JP)
(72) Inventor: Ohkubo, Kiyomi, Kawasaki-shi, Kanagawa 211-8588 (JP)
(74) Representative: Stebbing, Timothy Charles

(57) **Abstract**

A packaging box includes a body which has a top surface (U1-U4), a base (L1-L4), and a side (S1-S4), first and second signal conductors (22,23), and an RFID tag (3). The first signal conductor (22) is provided on a first region (R1) of the body. The second signal conductor (23) is provided on a second region (R2) of the body. The RFID tag (3) is attached to the side in a third region as being electrically insulated from the first and the second signal conductors with a first electrode thereof connected to the first signal conductor (22) and a second electrode thereof connected to the second signal conductor (23).

## Description

This application claims the conventional priority based on Japanese Patent Application No.2008-073551, filed on March 21, 2008, the disclosures of which are incorporated herein by reference.

One embodiment of the present invention relates to a packaging box, a packaging material, a tag ID reading method, and a tag ID transmitting program, which may include a packaging box, a packaging material, a tag ID reading method, and a tag ID transmitting program in which an RFID tag which does not face an antenna can be detected.

When an RFID tag receives radio waves transmitted from a reader, the RFID tag returns its ID to the reader as a response. Based on this mechanism, products and packaging boxes are managed to which the RFID tags are attached.

For example, a packaging box has been proposed which has an IC tag that communicate in a non-contact manner by using radio waves and is provided on the outside of the box, and has reflection means that reflects the radio waves and is provided on the inside of the box (see Japanese Patent Laid-Open No. 2006-224972).

When the RFID tag is used, radio waves are transmitted and received between an antenna of the reader and the RFID tag. Thus, the RFID tag desirably faces the antenna. However, for various reasons, when a packaging box containing products is transported, the RFID tag thereof need not necessarily face the antenna.

Further, when a material which absorbs (or reflects) radio waves (wave absorber or wave reflector) exists between or around the antenna of the reader and the RFID tag, the RFID tag is blocked from receiving the radio waves transmitted from the antenna. Thus, the RFID can not detect a signal from the reader.

Especially, a corrugated board, which is mainly used for a packaging box, easily absorbs water. Accordingly, the corrugated board sometimes shows characteristics near to a conductor or characteristics of a wave absorber. For this reason, the corrugated board functions as the wave absorber when it moistens in the rain or in a highly humid environment, so that communication between the antenna and the RFID tag becomes unstable.

An embodiment of the present invention may provide a packaging box in which an RFID tag which does not face an antenna can be detected.

An embodiment of the present invention may also provide a packaging material used for making a packaging box in which an RFID tag which does not face an antenna can be detected.

An embodiment of the present invention may also provide a tag ID reading method in which an RFID tag which does not face an antenna can be detected.

A further embodiment of the present invention may provide a tag ID transmitting program in which an RFID tag which does not face an antenna can be detected.

The packaging box includes a body having a top surface, a base and a side, first and second signal conductors, and an RFID tag. The first signal conductor is provided on a first region on an outside of the body. The second signal conductor is provided on a second region on the outside of the body and electrically insulated from the first signal conductor. The RFID tag is attached to a third region on an outside of the side as being electrically insulated from the first and second signal conductors with a first electrode thereof connected to the first signal conductor and a second electrode thereof connected to the second signal conductor.

The packaging box preferably has the RFID tag which further includes a connection circuit, a memory circuit, an antenna circuit, and a tag ID shared circuit. The connection circuit is connected to the first and second signal conductors via the first and second electrodes. The memory circuit stores one or more tag IDs including at least the tag ID of the RFID tag. The antenna circuit transmits/receives a signal to/from a reader. The tag ID shared circuit causes the one or more tag IDs stored in the memory circuit to be transmitted to the reader via the antenna circuit.

The packaging box may have one or more tag IDs which are stored in the memory circuit and include the tag ID of the RFID tag of the other RFID tags which is connected to the RFID tag via the first or second signal conductor.

The packaging material includes a body, a first signal conductor, a second signal conductor, and a third region. The body has faces to make a top surface, a base and a side of a packaging box which is to be set up (put together) with the packaging material. The first signal conductor is provided on a first region of each of the faces which is to make an outside of the packaging box which is to be set up with the packaging material. The second signal conductor is provided on a second region of each of the faces which is to make the outside and electrically insulated from the first signal conductor.
The third region is a region provided on the face which is to make the outside of the side of the packaging box which is to be set up with the packaging material. The third region is available for an RFID tag to be attached thereto as the RFID tag is being electrically insulated from the first and second signal conductors with a first electrode thereof connected to the first signal conductor and a second electrode thereof connected to the second signal conductor.

The tag ID reading method is a tag ID reading method for reading tag IDs from a plurality of RFID tags by a reader in an aggregate of a plurality of piled up packaging boxes. Each of the packaging boxes includes a body having a top surface, a base and a side, a first signal conductor provided on a first region on an outside of the body, a second signal conductor provided on a second region on the outside of the body with electrically insulated from the first signal conductor, and an RFID tag attached to a third region on an outside of the side as being electrically insulated from the first and second signal conductors with a first electrode thereof connected to the first signal conductor and a second electrode thereof connected to the second signal conductor. In the tag ID reading method, the RFID tags of the packaging boxes of the plurality of packaging boxes transmit/receive the tag IDs thereof where the RFID tags have the first and second electrodes thereof contact each other, the RFID tag that receives the tag ID from the RFID tag of the other RFID tags of the plurality of RFID tags holds the received tag ID, and the RFID tag that can communicate with the reader transmits one or more tag IDs including at least the tag ID of the RFID tag to the reader.

The tag ID transmitting program is a tag ID transmitting program for an RFID tag to transmit a tag ID to a reader in an aggregate of a plurality of piled up packaging boxes. Each of the packaging boxes includes a body having a top surface, a base and a side, a first signal conductor provided on a first region on an outside of the body, a second signal conductor provided on a second region on the outside of the body with electrically insulated from the first signal conductor, and an RFID tag attached to a third region on an outside of the side as being electrically insulated from the first and second signal conductors with a first electrode thereof connected to the first signal conductor and a second electrode thereof connected to the second signal conductor. In the tag ID transmitting program, when the RFID tags of the packaging boxes of the plurality of packaging boxes have the first and second electrodes thereof contact each other, the RFID tags transmit/receive the tag IDs thereof, when the RFID tag receives the tag ID from the RFID tag of the other RFID tags, the RFID tag holds the received tag ID, and when the RFID tag can communicate with the reader, the RFID tag transmits one or more tag IDs including at least the tag ID of the RFID tag to the reader.

In an embodiment of the present invention, an RFID tag which is attached to a packaging box is electrically connected to another RFID tag which is attached to another packaging box as a result of having the first and second signal conductors of the respective packaging boxes contact each other. As a result, information such as the tag ID can be transmitted from a first RFID tag, that cannot face the antenna, to a second RFID tag that faces the antenna, so that the second RFID tag can transmit the information such as the tag ID to the reader. Accordingly, the information such as the tag ID can be read even if the RFID tag does not face the antenna when the packaging box containing products with RFID tags is transported. Also, the information such as the tag ID can be read even if a wave absorber (or wave reflector) is situated between or around the antenna of the reader and the RFID tag. In particular, even if the corrugated board which is mainly used for a packaging box absorbs water and takes on the feature of the wave absorber, the communication between the reader and the RFID tag can be kept stable.

According to the packaging box in one embodiment, the RFID tag is provided with a connection circuit, a memory circuit, an antenna circuit, and a tag ID shared circuit. As a result, the tag ID of another RFID tag to be stored in the memory circuit of an RFID tag in addition to the self tag ID.

According to the packaging box in one embodiment, a first RFID tag includes the tag ID of a second RFID tag. As a result, the tag ID of the second RFID tag to be transmitted to the reader from the first RFID tag.

According to the packaging material, the abovementioned packaging box can be easily obtained as a result of setting up the packaging material, and the first and second signal conductors of adjoining packaging boxes can be made to contact each other. As a result, the RFID tag which is attached to a packaging box is caused to be electrically connected to the RFID tag which is attached to another packaging box so that the information such as the tag ID can be read even if the RFID tag does not face the antenna or even if a wave absorber (or a wave reflector) is interposed between or around the reader and the RFID tag as mentioned above.

According to the tag ID reading method and the tag ID transmitting program, the first and second signal conductors of the adjoining packaging boxes can be brought into contact with each other as a result of using the abovementioned packaging boxes as an aggregate of a plurality of piled up packaging boxes. As a result, the RFID tag which is attached to a packaging box is caused to be electrically connected to the RFID tag which is attached to another packaging box so that the information such as the tag ID can be transmitted and received among the plurality of RFID tags. Consequently, the information such as the tag ID can be read even if the RFID tag does not face the antenna or even if a wave absorber (or a wave reflector) exists between or around the reader and the RFID tag as mentioned above.
Reference is made, by way of example only, to the accompanying drawings in which:

FIG. 1 is a diagram illustrating an embodiment of a tag ID reading method and packaging boxes used for the method.
FIG. 2 is a development of a packaging material which is to form the packaging box.
FIG. 3 is a perspective view of a set up packaging box.
FIG. 4 is a schematic diagram of attachment of an RFID tag.
FIG. 5 is a diagram illustrating an embodiment of a structure of the RFID tag.
FIGS. 6 and 7 are a process flowchart of an RFID tag reading.
FIG. 8 is a diagram illustrating another embodiment of the process flowchart of the RFID tag reading.
FIG. 9 is a diagram illustrating another embodiment of the tag ID reading method and another embodiment of the packaging boxes used for the method.
FIGS. 10 is a diagram illustrating a yet another embodiment of the tag ID reading method and a yet another embodiment of the packaging box used for the method.
FIG. 11 is a development of a packaging material which is to form the packaging box illustrated in FIG. 10.
FIGS. 12 is a diagram illustrating a yet another embodiment of the tag ID reading method and a yet another embodiment of the packaging box used for the method.
FIG. 13 is a development of a packaging material which is to form the packaging box illustrated in FIG. 12.

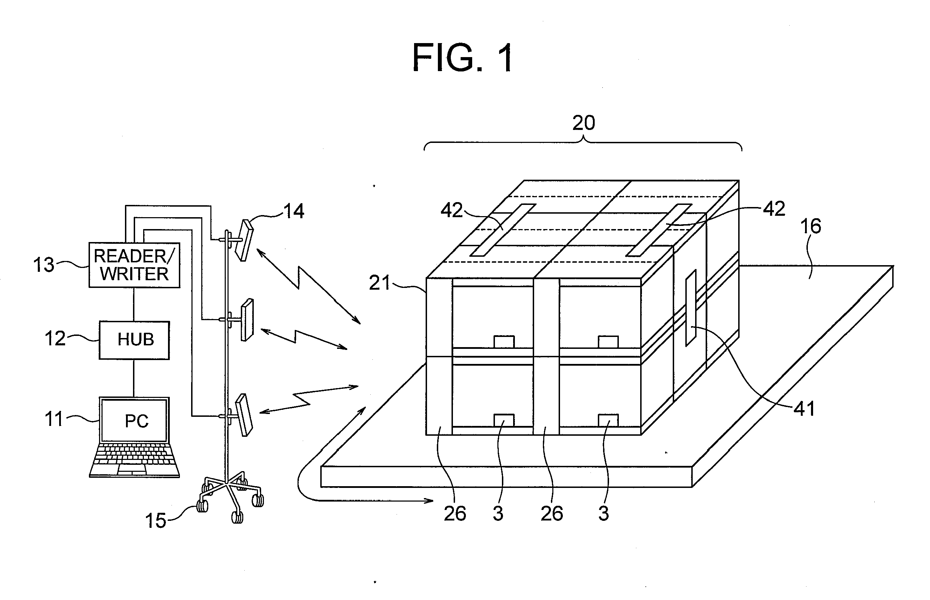

FIG. 1 illustrates a structure of a tag ID reading system which implements the tag ID reading method according to one embodiment of the present invention, and piled up packaging boxes.

The tag ID reading system includes a personal computer (PC) 11 which acts as a controlling device, a connecting device (HUB) 12, an RFID reader-writer (a reading and writing device, hereinafter simply referred to as a reader in some occasions) 13, a plurality of antennas 14, and a cart 15. The RFID reader-writer 13 is connected to the personal computer 11 via the HUB 12, and provided with the plurality of antennas 14. The plurality of antennas 14 are mounted on the single cart 15.

In the embodiment of FIG. 1, the reader 13 is to read an aggregate 20 which is a plurality of piled up packaging boxes 21, specifically, a plurality of RFID tags 3 included in the aggregate 20. The aggregate 20 is placed on a pallet 16 as a mass of piled up packaging boxes 21. In the embodiment of FIG. 1, the pallet 16 is conductive, and made of a metal plate, for example. The cart 15 is moved along a part of the edge of the pallet 16 as indicated by the arrow in FIG. 1 by an operator or automatically on a guide rail or the like, for example.

The RFID reader-writer 13 transmits (or outputs) a predetermined signal from the plurality of antennas 14. An RFID tag 3, which has received the signal from the antennas 14, transmits a predetermined answer signal to the antennas 14 as a response to the signal. The answer signal includes one or more tag IDs stored in the RFID tag 3. Then, the RFID reader-writer 13 reads the tag IDs stored in the RFID tag 3. The RFID reader-writer 13 which has received the answer signal transmits the received answer signal to the personal computer 11 via the HUB 12. The personal computer 11 which has received the answer signal can detect the packaging boxes 21, to which the RFID tag 3 is attached, by performing predetermined signal processing.

In the embodiment of FIG. 1, the aggregate 20 includes a plurality of packaging boxes 21 each of which has a uniform shape. In FIG. 1, the aggregate 20 is assumed as including twelve packaging boxes 21. The twelve packaging boxes 21 in a uniform shape are piled up in a plurality of layers in such a manner that the same faces look the same direction. In the embodiment of FIG. 1, the packaging boxes 21 are piled up in two layers. The RFID tag 3 is attached to a side S of each of the packaging boxes 21. In the embodiment of FIG. 1, the face of each of the packaging boxes 21 or the face of the aggregate 20, to which the RFID tag(s) 3 is attached, is referred to a "front face". In this case, the RFID tags 3 attached to the front faces of the four packaging boxes 21 face any of the antennas 14 by moving the cart 15. In other words, no obstacle exists between the RFID tags 3 on the front faces and the antennas 14, so that the RFID tags 3 see through the antennas 14. Accordingly, the RFID tags 3 on the front faces can communicate with the RFID reader-writer 13 via the antennas 14. As a result, the RFID reader-writer 13 can read the tag IDs from the four RFID tags 3 on the front faces. The tag ID of each of the four RFID tags 3, which are attached to the front faces of the four packaging boxes 21, is directly read by the RFID reader-writer 13 from each of the RFID tags 3.

In contrast, any of the RFID tags 3 which are attached to the remaining eight packaging boxes 21 cannot see through the antennas 14 because of the presence of the other packaging boxes 21. In other words, the RFID tags 3, which are attached to the remaining eight packaging boxes 21, are attached to places which cannot face the antennas. Accordingly, the RFID reader-writer 13 cannot directly read the tag IDs of the eight RFID tags 3 from those RFID tags 3. In the embodiment of FIG. 1, however, the tag IDs of the eight RFID tags 3 are indirectly read from the four RFID tags 3, which are attached to the front faces as described later.

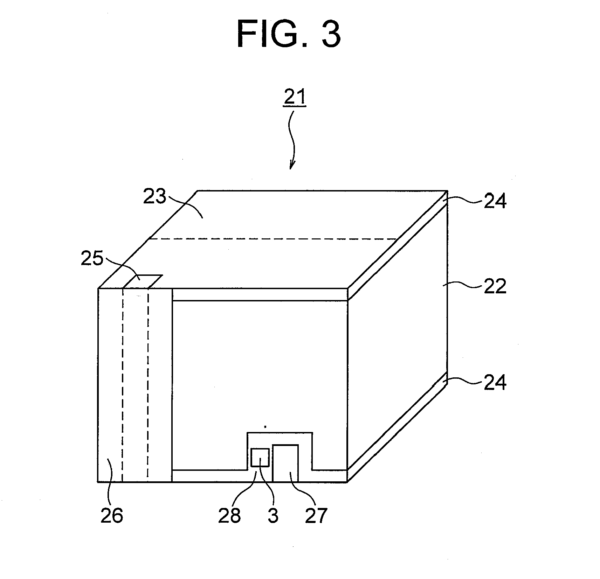

For simplicity of description, each of the packaging boxes 21 of the aggregate 20 illustrated in FIG. 1 has its details somewhat omitted (same in FIGS. 3, 9, 10 and 12).

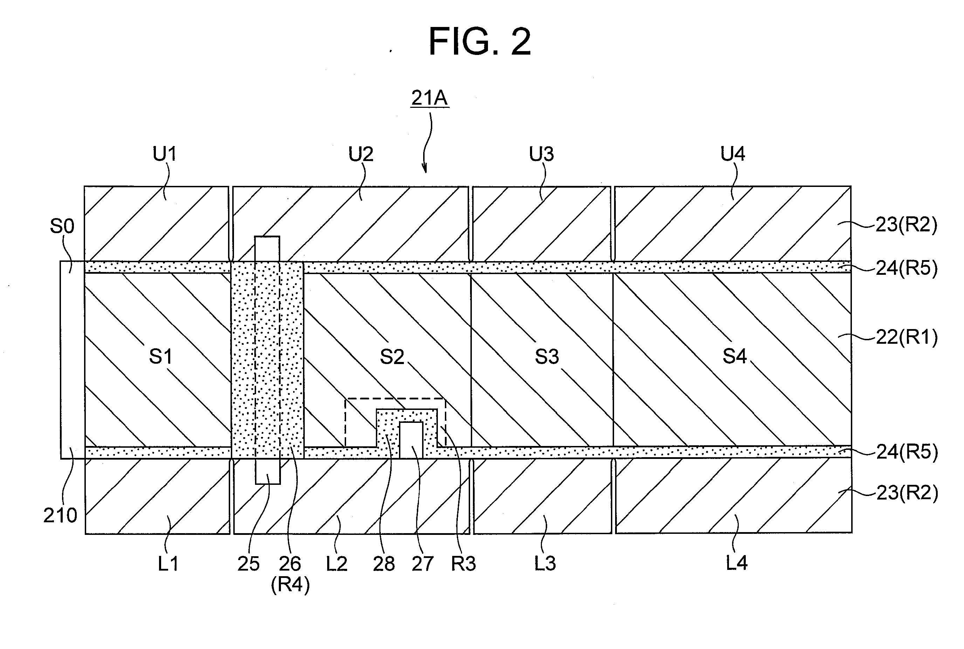

FIG. 2 illustrates a development of a packaging material 21A which is to form the packaging box 21 according to the embodiment. FIG. 3 illustrates an appearance of the packaging box 21 according to the embodiment.

In FIG. 2, a body 210 of the packaging material 21A includes a face U (faces U1 to U4) which is to be a top surface of the packaging box 21, a face L (faces L1 to L4) which is to be a base of the packaging box 21, and a face S (faces S1 to S4) which is to be a side of the packaging box 21, when the packaging material 21A is folded to make up the packaging box 21. In the description below, the face U which is to be the top surface will be simply referred to as the top surface U. The other faces will also be referred to in the same manner.

The packaging material 21A has a part for paste (pasting part) S0 to the side S for setting up the packaging box 21. Since both of a conductor and a insulation film is not provided on the pasting part S0, the body 210 of the packaging material 21A is exposed in that area.

The body 210 is made from an electrically insulating material such as a corrugated board, plastics or the like. A first signal conductor 22 and a second signal conductor 23 are provided on the body 210 of the packaging material 21A.

The first signal conductor 22 is used as a first (+) electrode or wiring (hereinafter simply referred to as an electrode). The first signal conductor 22 is provided on a first region R1 of a face which is to be an outside of the packaging box 21 (hereinafter the face is simply referred to as an outside) in a case that the packaging material 21A is set up to the packaging box 21. In the embodiment of FIG. 1, the first signal conductor 22 is provided on the sides S of the packaging box 21. The region on which the first signal conductor 22 is provided is the first region R1. The first region R1 occupies most of the sides S.

The second signal conductor 23 is used as a second (-) electrode. The second signal conductor 23 is provided on a second region R2 of the outside, and is electrically insulated from the first signal conductor 22. The second signal conductor 23 is provided on both of the top surface U and the base L of the packaging box 21. The region on which the second signal conductor 23 is provided is the second region R2. The second region R2 occupies most of the top surface U and the base L.

The first signal conductor 22 and the second signal conductor 23 are made of dried films of conductive ink, which is painted on the outside of the body 210 which has electric non-conductance. The conductive ink is the ink whose dried film is conductive. The conductive ink contains gold, silver, copper, nickel, conductive carbon powder or the like as a filler, and contains an insulator such as glass frit, polyamide, epoxy, polyester or the like as a binder.

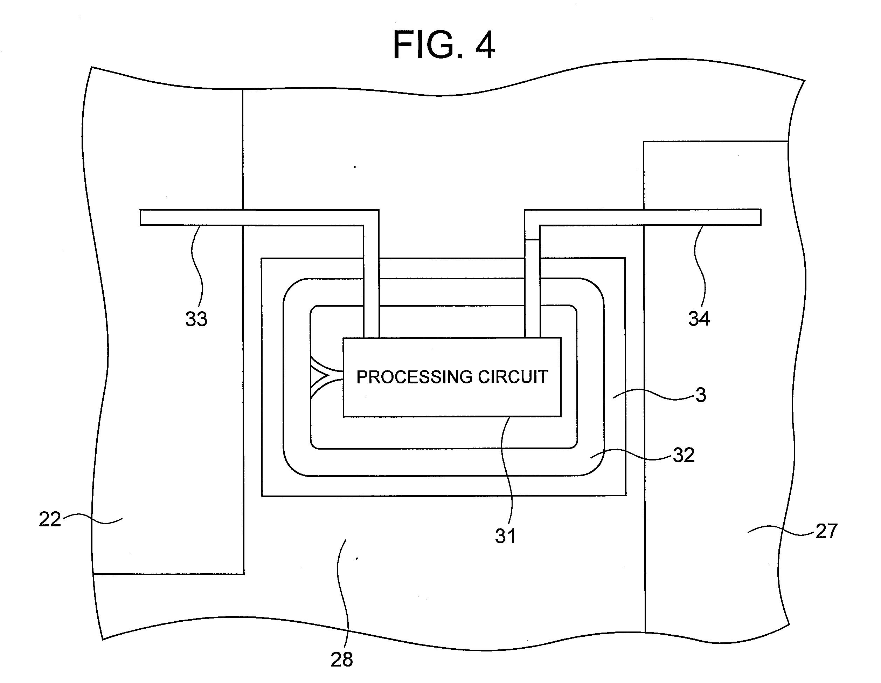

The body 210 of the packaging material 21A includes a third region R3 as indicated by the dotted line in FIG. 2. The third region R3 is provided on an outside of a side S2 of the packaging box 21 in a case that the packaging material 21A is set up to the packaging box 21. In other words, the third region R3 is provided on a region in which a part of the first signal conductor 22 is cut out in a part of the side S2. The third region R3 is the region to which the RFID tag 3 is to be attached as described later with reference to FIGS. 3 and 4. The third region R3 includes a connecting conductor 27 and an insulation region 28 for attaching the RFID tag 3.

The connecting conductor 27 is an extended part of the second signal conductor 23 provided on a base L2, which is the second region R2 of the packaging box 21. The connecting conductor 27 is a continuous region with the second signal conductor 23. The connecting conductor 27 extrudes from the second signal conductor 23 on the base L2 into the side S2. As a result, the first signal conductor 22 and the connecting conductor 27 are formed on the side S2 and sandwich the insulation region 28.

The insulation region 28 is the region to which the RFID tag 3 is attached. The RFID tag 3 is attached on the insulation region 28 by an adhesive or the like. The insulation region 28 is made of a dried film of electrically insulating ink painted on the body 210. The electrically insulating ink is the ink whose dried film is electrically insulating, and is made of a general plastic paint, for example. After the first signal conductor 22 and the second signal conductor 23 are painted and dried, the ink which is to be the insulation region 28 is painted to the packaging material 21A, and dried. The insulation region 28 may also be simply formed by exposing the body 210 without any painted electrically insulating ink.

The packaging material 21A includes a fourth region R4 on the outside of the packaging box 21 which is to be the side S2. The fourth region R4 is provided on a region in which a part of the first signal conductor 22 is cut out in a part of the side S2. The fourth region R4 is the region for providing a connecting conductor 25, which connects the second signal conductors 23 provided on both of the top surface U and the base L of the packaging box 21. The connecting conductor 25 is provided on the body 210 as illustrated in FIG. 2 by the same way with the first signal conductor 22 and the second signal conductor 23.

The fourth region R4 is covered with an insulation cover 26 all of which is made of a insulation film. In other words, the region on which the insulation cover 26 is provided is the fourth region R4. The connecting conductor 25 is covered with the insulation cover 26 on the outside of the side S2 of the packaging box 21. The first signal conductor 22 and the second signal conductor 23 are electrically insulated from each other by the insulation cover 26 which is made of the insulating ink painted to the body 210. After the connecting conductor 25 is painted and dried, the insulation cover 26 is provided on the packaging material 21A as illustrated in FIG. 2 by the same way with the insulation region 28.

The body 210 of the packaging material 21A has a fifth region R5 between the first signal conductor 22 and the second signal conductor 23, or between the first region R1 and the second region R2. The fifth region R5 is the region for which electrically insulates the first signal conductor 22 from the second signal conductor 23. For this reason, an insulator 24 is provided on the fifth region R5. In other words, the region on which the insulator 24 is provided is the fifth region R5. The first signal conductor 22 is electrically insulated from the second signal conductor 23 by the insulator 24. The insulator 24 is provided on the packaging material 21A as illustrated in FIG. 2 by the same way with the insulation cover 26, for example.

As mentioned above, the packaging box 21 of FIGS. 2 and 3 is divided into two parts in the vertical direction in a state that the packaging box 21 is placed with the base L downside, and the two signal conductors 22 and 23 is provided in each part of the divided two parts. Specifically, the signal conductor 23 is provided on the top surface U and the base L of the packaging box 21, and the signal conductor 22 is provided on the side S. As a result of dividing the signal conductors, the packaging box 21 has features as follow. That is, the third region R3 for which the RFID tag 3 is attached is provided on the packaging box 21. The fourth region R4 is provided on the packaging box 21 to connect both of the signal conductors 23 on the top surface U and the base L. The fifth region R5 is provided on the packaging box 21 to insulate the signal conductor 22 from the signal conductor 23.

The packaging box 21 of FIG. 3 is set up in the manner described below. The pasting part S0 on the packaging material 21A of FIG. 2 is fixed by pasting, for example, to an inside of a side S4 which is the other side of the side S. Then, with the pasting part S0 fixed, both of bases L1 and L3 are bent to a predetermined direction or bent inside, and both of base L2 L4 are also bent inside. Then, the bent four faces are fixed to each other with staples or the like. After the packaging material 21A is set up to the packaging box 21, for example, the RFID tag 3 is attached to the third region R3 of the packaging box 21. As a result, the packaging box 21 with the top surface U, which is opened, is obtained.

With the top surface U opened, products are packed into the packaging box 21. Then, both of top surfaces U1 and U3 are bent to a predetermined direction or bent inside, and both of top surfaces U2 and U4 are also bent inside. The four faces are fixed to each other with staples or the like. As a result, the products have been packed, and the packaging box 21 as illustrated in FIG. 3 is obtained.

In FIG. 3, the body 210 of the packaging box 21 has a shape of a rectangular parallelepiped or a cube, and has the top surfaces U, the base L, and the sides S. The base L does not appear in FIG. 3. The first signal conductor 22 appears on the first region R1, which is one part of the outside of the side S. And, the second signal conductors 23 appear on the second regions R2, which is the outside of the top surface U and the base L. The second signal conductors 23 on the top surface U and the base L are connected to each other by the connecting conductor 25 which is provided on the fourth region R4, which is another part of the outside of the side S2. The connecting conductor 25 is covered with the insulation cover 26 in the fourth region R4 of the side S2.

On the third region R3, which is yet another part of the outside of the side S2, the RFID tag 3 is attached as being electrically insulated from the first signal conductor 22 and the second signal conductor 23. As it will be described with reference to FIG. 4, a first electrode of the RFID tag 3, which is attached to the packaging box 21, is connected to the first signal conductor 22. And, a second electrode of the RFID tag 3 is connected to the connecting conductor 27 or the second signal conductor 23.

The packaging boxes 21 in the state illustrated in FIG. 3 are piled up on the conductive pallet 16, as illustrated in FIG. 1. The packaging boxes 21 are placed on the conductive pallet 16 in such a manner that the sides S of the adjoining packaging boxes 21 contact each other without spaces between the sides S. As a result, the sides S of the adjoining packaging boxes 21 are electrically connected to each other.

As described above, in at least six packaging boxes 21 of the upper layer piled up on the conductive pallet 16, the first signal conductor 22 of one packaging box 21 has been electrically connected to the first signal conductor 22 of adjoining another packaging box 21. Accordingly, the first signal conductors 22 of the six packaging boxes 21 of the upper layer have been electrically connected to each other. This is also applied to the six packaging boxes 21 of the lower layer.

In the two packaging boxes 21, one of which is piled up on the other, the second signal conductor 23 on the top surface U of the packaging box 21 of the lower layer and the second signal conductor 23 on the base L of the packaging box 21 of the upper layer are electrically connected to each other. Accordingly, the two packaging boxes 21, one of which is piled up on the other, are electrically connected. As a result, all the second signal conductors 23 which are piled up on the conductive pallet 16 are electrically connected via the conductive pallet 16 in the end.

In addition to the above, as illustrated in FIG. 1, the sides S of the adjoining packaging boxes 21 may be adhered to each other by an adhesive tape 41, and the top surfaces U may be adhered to each other by an adhesive tape 42. This can ensure the electrical connection between the piled up packaging boxes 21 more strongly.

Further, the adhesive tapes 41 and 42 may be a conductive tape. Conductive tapes 41 and 42 electrically connect the first signal conductors 22 provided on the sides S of the adjoining packaging boxes 21 to each other, and the second signal conductors 23 provided on the top surfaces U of the packaging boxes 21 of the upper layer to each other. In this case, the adhesive tape 41 adheres the sides S, which do not have the RFID tags 3 of the packaging boxes 21, at one or more places. And, the adhesive tape 42 adheres the top surfaces U of the packaging boxes 21 in two different directions as illustrated in FIG. 1. As a result, when at least one of the RFID tags 3 faces the antenna 14, the tag IDs of the twelve RFID tags 3 which are attached to the twelve packaging boxes 21 can be read out from the RFID tag 3 which faces the antenna 14.

FIG. 4 illustrates the RFID tag 3 which is used in the tag ID reading method according to the embodiment. As illustrated in FIG. 4, the RFID tag 3 has a first electrode 33 and a second electrode 34. The first electrode 33 is extended into a first direction, and its edge is connected to the first signal conductor 22. The second electrode 34 is extended into a second direction, which is opposite to the first direction, and its edge is connected to the connecting conductor 27. As a result, the second electrode 34 is connected to the second signal conductor 23.

For this reason, the third region R3 on the outside of the side S2 is further divided into three. Specifically, as illustrated in FIGS. 2 and 4, the insulation region 28, which is the region to which the RFID tag 3 is attached, is provided on a central part of the third region R3. The first signal conductor 22 and the connecting conductor 27 or the second signal conductor 23 are symmetrically provided at the both sides of the insulation region 28.

As illustrated in FIG. 4, the first electrode 33 and the second electrode 34 of the RFID tag 3 are connected to a processing circuit 31 of the RFID tag 3. To the processing circuit 31, an antenna 32 is connected which surrounds a chip of the RFID tag 3.

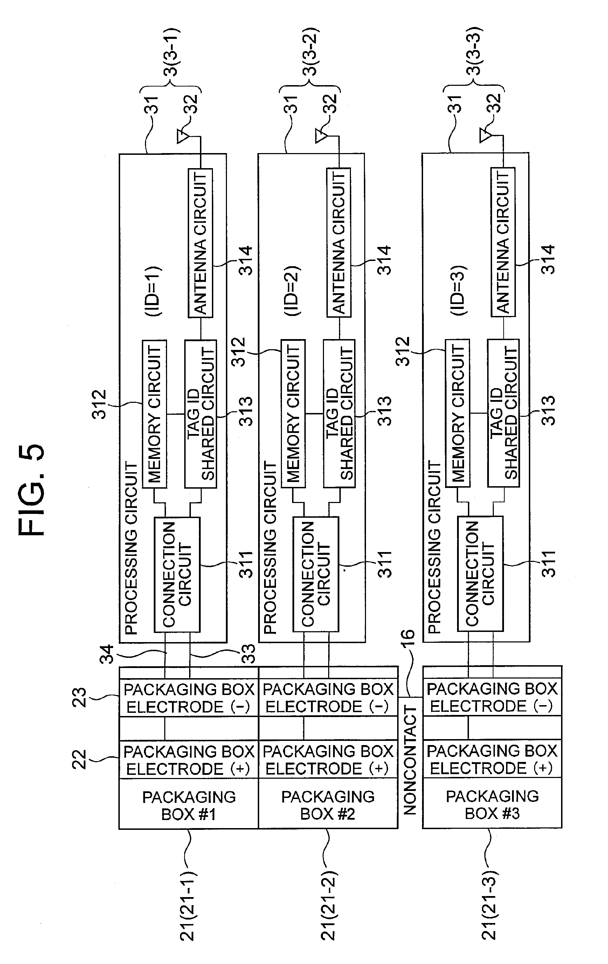

FIG. 5 illustrates mainly the RFID tags 3, which are used in the tag ID reading method of the embodiment, and an embodiment of a circuit of the packaging box 21 including the RFID tags 3. The processing circuit 31 of the RFID tag 3 includes a connection circuit 311, a memory circuit 312, a tag ID shared circuit 313, and an antenna circuit 314.

In the description below, the RFID tag 3 whose tag ID is 1 or ID = 1 is sometimes referred to as an RFID tag 3-1, for example. The packaging box 21 to which the RFID tag 3-1 is attached is sometimes referred to as a packaging box 21-1, for example. The antenna circuit 314 and the like of the RFID tag 3-1 is sometimes referred to as an antenna circuit 314-1, for example. These are also applied to the other RFID tags 3, the other packaging boxes 21, the other antenna circuits 314 and the like.

The connection circuit 311 is connected to the first signal conductor 22 and the second signal conductor 23 via the first electrode 33 and the second electrode 34. One packaging box 21 is electrically connected to another packaging box 21 via the first signal conductor 22 and the second signal conductor 23. Accordingly, a connection circuit 311 of an RFID tag 3 which is attached to one packaging box 21 is connected to another connection circuit 311 of another RFID tag 3 which is attached to another packaging box 21. And, the tag IDs are transmitted and received between one RFID tag 3 and another RFID tag 3. As a result, one connection circuit 311 receives one or more tag IDs from another connection circuit 311, and transmits the tag IDs to another connection circuit 311. One connection circuit 311 holds one or more tag IDs which are received from another RFID tag 3 for a predetermined period.

The memory circuit 312 holds the tag ID, which is allocated to the RFID tag 3 in advance. The tag ID is uniquely identified. The connection circuit 311 stores one or more tag IDs, which is received from another RFID tag 3, in the memory circuit 312. Thus, the tag IDs stored in the memory circuit 312 include the tag ID of another RFID tag 3 connected thereto via the first signal conductor 22 and the second signal conductor 23.

The antenna circuit 314 includes the antenna 32, and wirelessly transmits and receives information to and from the reader 13. The tag ID shared circuit 313 sends out one or more tag IDs which is stored in the memory circuit 312 to the antenna circuit 314, and causes the antenna circuit 314 to transmit the tag IDs to the reader 13.

In general occasions, all the RFID tags 3 attached to all the packaging boxes 21 are electrically connected to each other, and can transmit and receive the information to and from each other. However, as illustrated in FIG. 5, there is a case that the packaging box 21-1, which has the RFID tag 3 with the tag ID = 1 or to which the RFID tag 3-1 is attached, is electrically connected to the another packaging box 21-2, which has the RFID tag 3 with the tag ID = 2, but is not electrically connected to another packaging box 21-3, which has the RFID tag 3 with the tag ID = 3. This case occurs, for example, when the first signal conductor 22 provided on the packaging box 21-3 becomes in a condition of non-contact with the first signal conductor 22 provided on the packaging box 21-2. Incidentally, the second signal conductors 23 are in a condition of electrically connected to each other via the pallet 16. The first signal conductors 22 and the second signal conductors 23 are used as transmission pass for a low voltage operating signal. Thus, a very small signal sent from the connection circuit 311 can be transmitted and received.

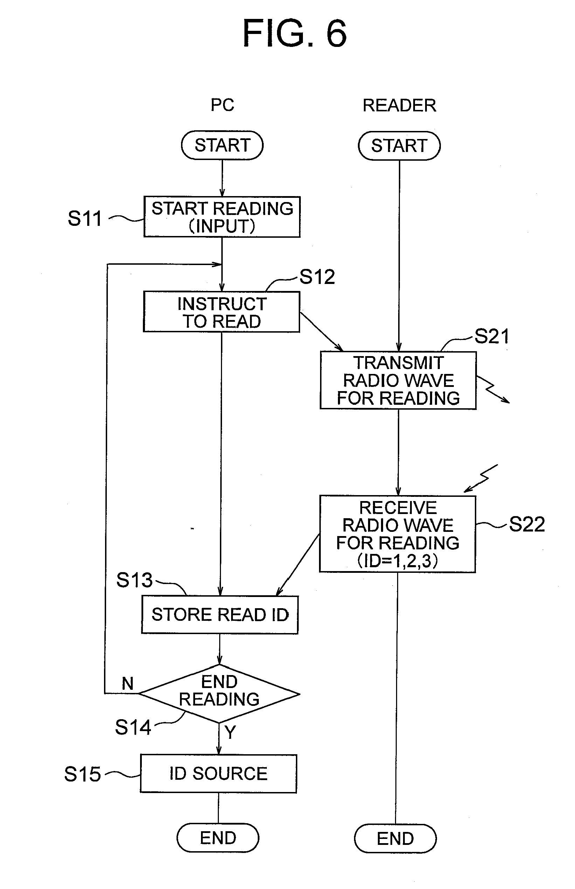

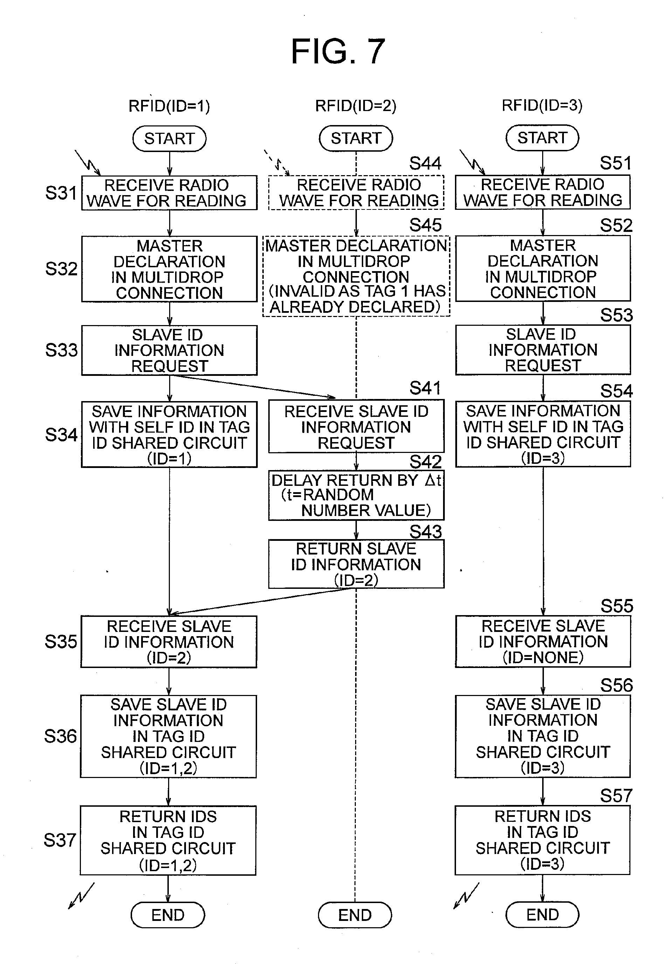

FIGS. 6 and 7 illustrate a process flowchart of a tag ID reading performed by the tag ID reading system of FIG. 1.

Before the reading of the tag ID is started, as illustrated in FIG. 1, the operator piles up the packaging boxes 21 on the conductive pallet 16 to make them the aggregate 20. When the aggregate 20 is made, the tag IDs are read from a plurality of RFID tags 3 by the reader 13.

In FIG. 6, when the personal computer 11 is inputted an instruction to start reading by the operator (step S11), the personal computer 11 instructs the reader 13 via the HUB 12 to read the tag IDs from the RFID tags 3 (step S12), and enters into the wait condition. Then, the personal computer 11 receives the tag IDs from the reader 13 as a response. In this manner, among the plurality of packaging boxes 21, the RFID tags 3 of the packaging boxes 21, which have the first electrode 33 and the second electrode 34 contact with each other, transmit and receive the tag IDs. The personal computer 11 stores the tag IDs, which are read by the reader 13 and received from the reader 13, into the memory circuit 312 (step S13).

In the storing processing at the step S13, the personal computer 11 discards tag IDs which overlap with tag IDs already received, among the tag IDs received from the reader 13. The personal computer 11 holds tag IDs, which do not overlap with tag IDs which has already been received or tag IDs which is received for the first time, among the tag IDs received from the reader 13, in the memory from the start to the end of the reading.

Then, the personal computer 11 checks whether the reading of the RFID tags 3 has end or not (step S14). The reading of the RFID tags 3 ends when the step S12 is repeated for a predetermined number of times, for example eight times, by predetermined time interval, for example. Instead, the reading of the RFID tags 3 may end when all the tag IDs are stored in the memory. When the reading does not end, the processing at the step S12 and subsequent steps are repeated. When the reading ends, the personal computer 11 displays the RFID tags 3 or the packaging boxes 21, which corresponds to the tag IDs, on a display device, for example, as the source of the tag IDs (step S15).

On the other hand, when the reader 13 is instructed to read the tag IDs from the personal computer 11 at the step S12, the reader 13 transmits radio waves for reading from the plurality of antennas 14 as a response to the instruction (step S21), and enters into the wait condition. In response, the RFID tag 3 which can communicate with the reader 13 transmits one or more tag IDs including at least the tag ID of the RFID tag 3 to the reader 13. For example, the RFID tag 3-1 transmits the tag ID = 1 of the RFID tag 3-1 and the tag ID = 2, which is obtained through the processing of FIG. 7 to be described later, to the reader 13. Then, whenever the reader 13 receives the tag IDs from the RFID tag 3 as a response, the reader 13 transmits the tag IDs which are read at that time to the personal computer 11 via the HUB 12 (step S22).

For example, it is assumed that the RFID tags 3 whose IDs = 1 to 3 are present. In this case, it is further assumed that the tag ID of ID = 1 is received at the first reading, the tag IDs of ID = 1 and ID = 2 are received at each of the second to the fourth readings, the tag IDs of ID = 1 to ID = 3 are received at each of the fifth to the sixth readings, and the tag ID of ID = 3 is received at each of the seventh to the eighth readings.

According to the above received result, the personal computer 11 stores the tag ID of ID = 1 which is received at the first reading, the tag ID of ID = 2 which is received at the second reading, and the tag ID of ID = 3 which is received at the fifth reading. In contrast, the personal computer 11 discards the tag IDs of ID = 1 which are received at the second to the sixth readings, since the tag IDs of ID = 1 overlap with the tag ID which is received at the first reading. Similarly, the tag IDs of ID = 2 which are received at the third to the sixth readings and the tag IDs of ID = 3 which are received at the sixth to the eighth readings are also discarded as overlapping IDs. Consequently, the tag IDs of IDs = 1 to 3 are obtained as a result of the readings.

In FIG. 7, the antenna circuit 314-1 of the RFID tag 3-1 whose tag ID is 1 receives the radio waves for reading from the reader 13 via the antenna 32-1 (step S31). And, a tag ID shared circuit 313-1 generates a master declaration which indicates mastership in a multi-drop connection (step S32). Then, the tag ID shared circuit 313-1 which generated the master declaration transmits the master declaration and a request for slave ID information to the other RFID tags 3 via the connection circuit 311-1 (step S33), reads and holds the ID = 1, which is the tag ID of the RFID tags 3-1, from a memory circuit 312-1 (step S34), and enters into the wait condition.

For example, as illustrated in FIG. 5, it is assumed that the packaging box 21-1 to which the RFID tag 3-1 is attached is electrically connected to the packaging box 21-2 to which an RFID tag 3-2 whose tag ID = 2 is attached, but is not electrically connected to the packaging box 21-3 to which an RFID tag 3-3 whose tag ID = 3 is attached. It is also assumed that the packaging box 21-1 to which the RFID tag 3-1 is attached and the packaging box 21-3 to which the RFID tag 3-3 is attached can receive the radio waves for reading from the reader 13, but the packaging box 21-2 to which the RFID tag 3-2 is attached cannot receive the radio waves for reading from the reader 13.

Then, in the RFID tag 3-1, the connection circuit 311-1 receives the slave ID information or the tag ID = 2 of the RFID tag 3-2 from the RFID tag 3-2 (step S35). And, the tag ID shared circuit 313-1 holds the received tag ID (ID = 2) (step S36). Then, the tag ID shared circuit 313-1 transmits the held tag IDs (ID = 1 to 2) to the reader 13 via the antenna circuit 314-1, as a response to the radio waves for reading (step S37).

As mentioned above, an antenna circuit 314-2 of the RFID tag 3-2 cannot receive the radio waves for reading from the reader 13. Therefore, the antenna circuit 314-2 cannot receive the radio waves for reading at the step S44, and cannot generate the master declaration at the step S45, as indicated by dotted lines in FIG. 7.

In the state above described, the connection circuit 311-2 of the RFID tag 3-2 receives the master declaration and the request for slave ID information from the RFID tag 3-1 (step S41). In response, a tag ID shared circuit 313-2 of the RFID tag 3-2 reads the tag ID (ID = 2) of the RFID tag 3-2 from a memory circuit 312-2. And, the tag ID shared circuit 313-2 delays the returning processing by Δt (step S42), and then returns the read out the tag ID to the RFID tag 3-1 via a connection circuit 311-2, as a response to the request or as a slave ID information (step S43).

The Δt is a delay time, and defined by using a random number. For this purpose, the tag ID shared circuit 313 includes a random number generating circuit. Due to the delay time, responses from a plurality of RFID tag 3 do not clash at the same time.

After the above processing, the RFID tag 3-2 is into a state in which the RFID tag 3-2 can receive the radio waves for reading from the reader 13. Then, the RFID tag 3-2 may receive the radio waves for reading (step S44), and may transmit a master declaration (step S45). However, the RFID tag 3-1 already transmitted the master declaration. Thus, the RFID tags 3 other than the RFID tag 3-2, which received the master declaration from the RFID tag 3-1, ignore the master declaration from the RFID tag 3-2.

On the other hand, in the same way with the steps S31 to S34, the RFID tag 3-3 receives the radio waves for reading from the reader 13 (step S51), generates a master declaration (step S52), transmits the master declaration and a request for slave ID information to the other RFID tags 3 (step S53), reads and holds the tag ID (ID = 3) of the RFID tag 3-3 (step S54), and enters into the wait condition.

However, the RFID tag 3-3 is electrically connected to none of the other RFID tags 3. Thus, a connection circuit 311-3 does not receive slave ID information from any of the RFID tags 3 (step S55). Accordingly, a tag ID shared circuit 313-3 does not hold the tag IDs of the other RFID tags 3 (step S56), and transmits only the ID = 3, which is the tag ID of the RFID tag 3-3 which has been held, to the reader 13 via an antenna circuit 314-3, as a response to the radio waves for reading (step S57).

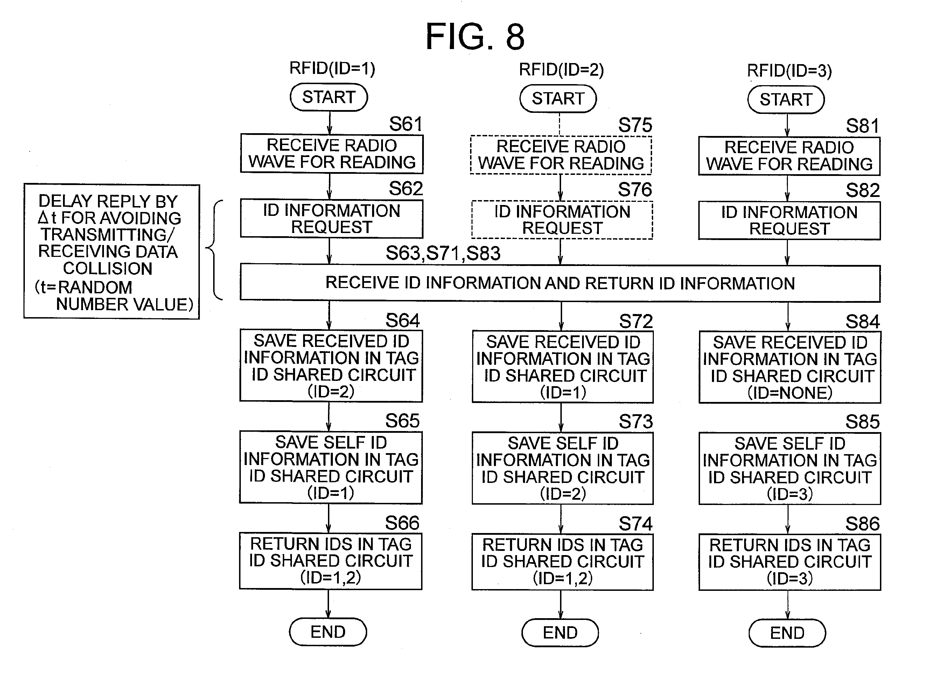

FIG. 8 illustrates another embodiment of the process flowchart of a tag ID reading performed by the tag ID reading system of FIG. 1. In this embodiment, the personal computer 11 performs the same processing with the steps S11 to S15 illustrated in FIG. 6, and the reader 13 performs the same processing with the steps S21 to S22 illustrated in FIG. 6. In response to the processing, the RFID tag 3 performs the processing illustrated in FIG. 8 instead of that of FIG. 7. The connection state among the RFID tags 3 from the RFID tag 3-1 whose tag ID = 1 to the RFID tag 3-3 whose tag ID = 3 and whether they can receive the radio waves for reading or not are assumed as the same as those in the case of FIG. 7.

In FIG. 8, the antenna circuit 314-1 of the RFID tag 3-1 receives the radio waves for reading from the reader 13 in the same way with the step S31 (step S61). And, the tag ID shared circuit 313-1 transmits a request for ID information to the other RFID tags 3 in the same way with the step S33 (step S62).

Then, the connection circuit 311-1 receives the ID information or the tag ID = 2 of another RFID tag 3-2 from the RFID tag 3-2 in the same way with the step S35. When the connection circuit 311-1 of the RFID tag 3-1 receives the request for ID information from another RFID tag 3, the tag ID shared circuit 313-1 reads the tag ID of the RFID tag 3-1 from the memory circuit 312-1, and returns the tag ID of the RFID tag 3-1 to another RFID tag 3 in the same way with the step S71, which will be described later (step S63). After the above processing, the tag ID shared circuit 313-1 holds the tag ID (ID = 2) received from the RFID tag 3-2 in the same way with the step S36 (step S64), reads and holds the tag ID (ID = 1) of the RFID tag 3-1 from the memory circuit 312-1 in the same way with the step S34 (step S65), and transmits the held tag IDs (ID = 1 to 2) to the reader 13 in the same way with the step S37 (step S66).

The antenna circuit 314-2 of the RFID tag 3-2 cannot receive the radio waves for reading from the reader 13. Therefore, the antenna circuit 314-2 cannot receive the radio waves for reading from the reader 13 at the step S75, and cannot generate the master declaration at the step S76.

In the state described above, the connection circuit 311-2 of the RFID tag 3-2 receives the request for ID information from the RFID tag 3-1. Then, the tag ID shared circuit 313-2 reads the tag ID (ID = 2) of the RFID tag 3-2 from the memory circuit 312-2, delays the returning processing by Δt in the same way with the step S42, and then returns the tag ID (ID = 2) to the RFID tag 3-1 via the connection circuit 311-2, as a response (ID information) to the request (step S71).

After the above processing, there is a possibility that the RFID tag 3-2 receives the tag ID from another RFID tag 3. In this case, the tag ID shared circuit 313-2 holds the tag ID received from the RFID tag 3 (step S72), reads and holds the tag ID (ID = 2) of the RFID tag 3-2 from the memory circuit 312-2 (step S73), and transmits the held tag IDs to the reader 13 (step S74), in the same way with the steps S64 to S66.

After the above processing, when the RFID tag 3-2 becomes into a state that the RFID tag 3-2 can receive the radio waves for reading from the reader 13, the RFID tag 3-2 may receive the radio waves for reading (step S75), and may transmit the request for ID information (step S76). However, the RFID tag 3-1 already transmitted the request for ID information. Thus, the RFID tags 3 other than the RFID tag 3-2 ignore the request for ID information from the RFID tag 3-2.

Further, still another RFID tag 3-3 performs the steps S81 to S86 in the same way with the steps S61 to S66. However, the RFID tag 3-3 is connected to none of the RFID tags 3. Therefore, the connection circuit 311-3 does not receive ID information from any of the RFID tags 3 (step S83). The tag ID shared circuit 313-3 does not hold the tag IDs of the other RFID tags 3 (step S84), and transmits only the tag ID of the RFID tag 3-3 which is held to the reader 13 via the antenna circuit 314-3 as a response to the radio waves for reading (step S86).

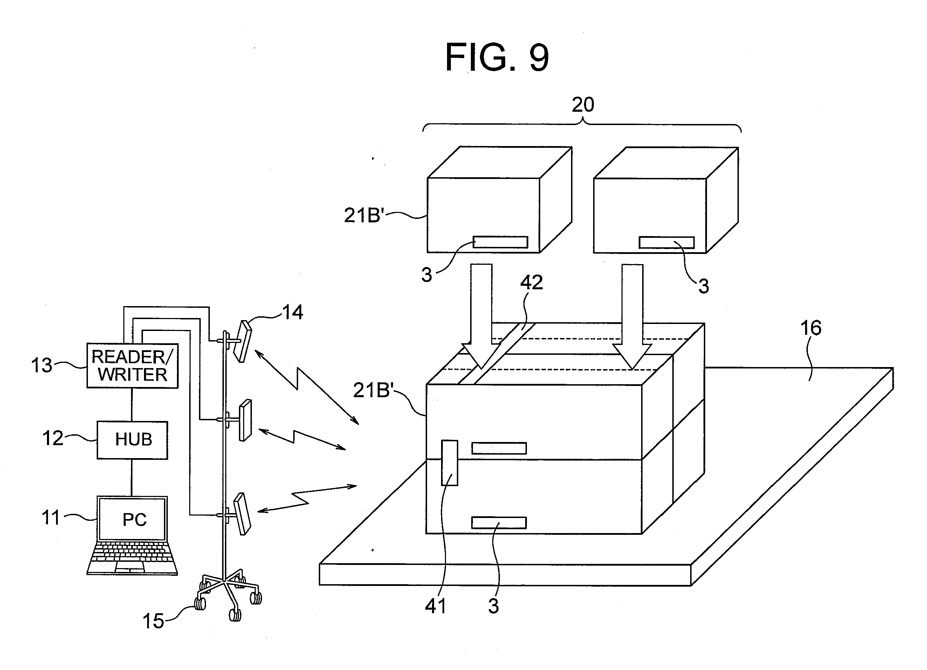

FIG. 9 illustrates another embodiment of the tag ID reading method and another embodiment of the packaging boxes used for the method.

The embodiment of FIG. 9 uses the packaging box 21 having the structure illustrated in FIGS. 2 and 3 as a small box (or an inner box) 21B. In this embodiment, a plurality of small boxes 21B, two small boxes 21B for example, are put into a big box (or an outer box) 21B'. The embodiment of FIG. 9 can be applied to a product including two parts, for example.

In this case, there is a possibility that the reader 13 cannot directly read the tag ID of the RFID tag 3, which is attached to the small box 21B contained in the outer box 21B'. Then, as the big box 21B', a packaging box is used which has a structure similar to the packaging box 21 of FIGS. 2 and 3.

The big box 21B' has the structure illustrated in FIGS. 2 and 3 on its outside, and has the structure illustrated in FIGS. 2 and 3 on its inside to which the RFID tag 3 is not attached. Thus, the big box 21B' has the completely same structure on the outside and the inside except that the RFID tag 3 is not attached to the inside. In other words, a relation between the outside of the big box 21B' and the inside of the big box 21B' is a mirror. With that structure, the first signal conductors 22 and the second signal conductors 23 which are provided on the outside and the inside of the big box 21B' are electrically connected to each other. Although they are not illustrated in the drawing, the connection is accomplished by a conductive tape, a metal fastening or the like.

By using the above structure, when the small boxes 21B are contained in the big box 21B', the sides of the small boxes 21B and the big box 21B' contact with each other, and thus, their first signal conductors 22 are electrically connected to each other. And, the top surfaces and the bases of the small boxes 21B and the big box 21B' contact with each other, and thus, their second signal conductors 23 are electrically connected to each other.

As a result, as illustrated in FIG. 9, when a plurality of big boxes 21B', four big boxes 21B' in the embodiment of FIG. 9, are piled up, the tag IDs of the RFID tags 3 of the small boxes 21B can be read in the same way with the case of FIG. 1 in which the packaging boxes 21 are piled up. In this embodiment, it is not necessary to take the small boxes 21B out from the big boxes 21B' after the small boxes 21B are once packed in the big box 21B'. Accordingly, it is quite convenient.

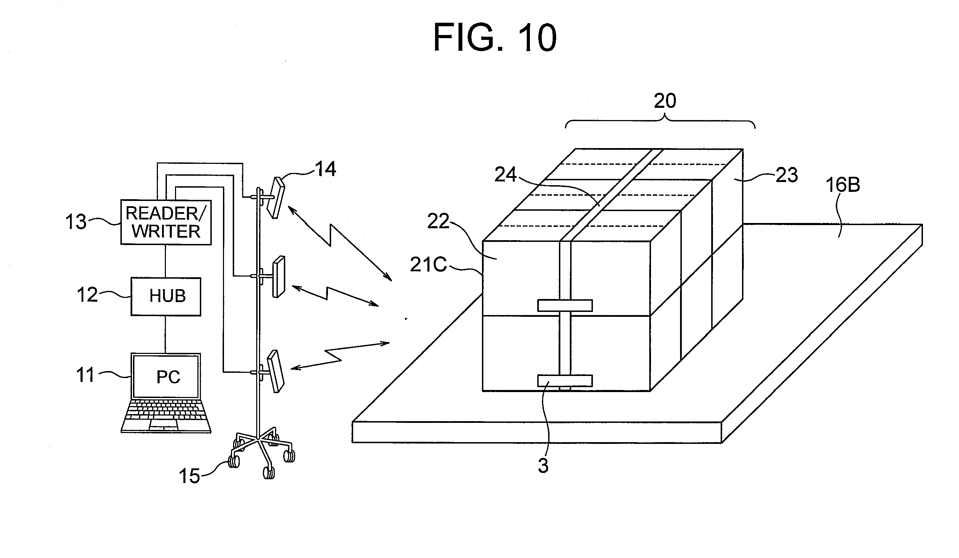

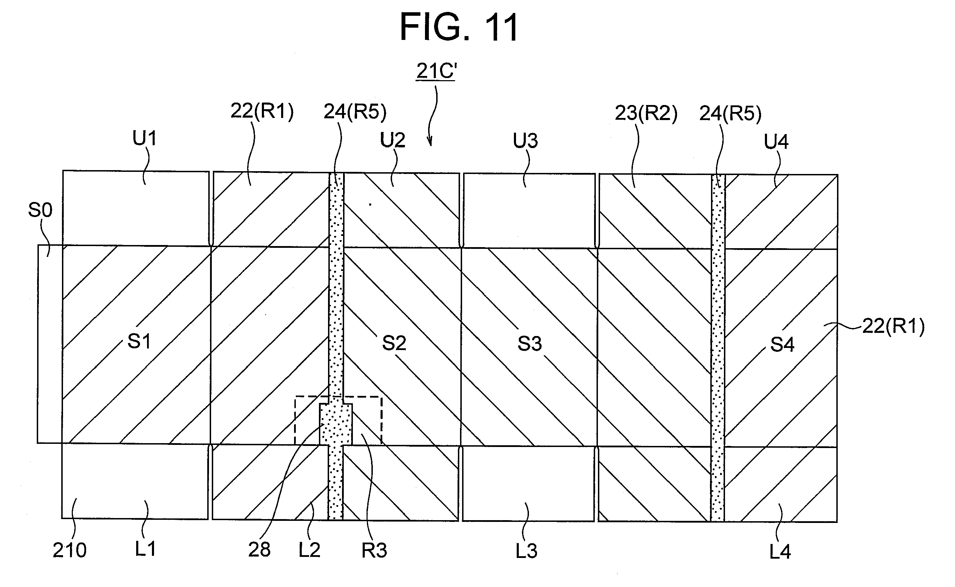

FIG. 10 illustrates a yet another embodiment of the tag ID reading method and a yet another embodiment of the packaging box used for the method. FIG. 11 illustrates a development of a packaging material which is to form the packaging box of FIG. 10.

In this embodiment, instead of the packaging box 21 having the structure illustrated in FIGS. 2 and 3, a packaging box 21C and a packaging material 21C' are used which have a structure much simpler than that of the packaging box 21. Specifically, in the packaging box 21C, two signal conductors 22 and 23, which connect the two electrodes 33 and 34 of the RFID tag 3, are provided in each of two parts of the packaging box 21C. The two parts are formed by dividing the packaging box 21C into two in a horizontal direction, respectively, in a case that the packaging box 21C is placed with the base L downside. In other words, as illustrated in FIGS. 10 and 11, the signal conductor 22 is provided on one of the two parts of the packaging box 21C, for example, the left side region. And, the signal conductor 23 is provided on the other of the two parts, for example, the right side region. The division makes it possible to omit the fourth region R4, which is provided on each of the packaging boxes 21 illustrated in FIGS. 2 and 3, and which connects the second signal conductors 23.

In the embodiments of FIGS. 10 and 11, an insulation region 24 (the fifth region R5), which insulates the signal conductor 22 from the signal conductor 23, is provided in the vertical direction along with a center line of the packaging box 21C in a case that the packaging box 21C is placed with the base L downside. The fifth region R5 is provided on a boundary between the signal conductors 22 and 23, which are provided on the left side and the right side of the packaging box 21C, respectively. As a result, the packaging box 21C is divided into two, the left side and the right side. The third region R3, for which the RFID tag 3 is attached, is provided on and across the fifth region R5. The insulation region 28, for which the RFID tag 3 is attached, is provided in integrated form with the insulation region 24. And, the connecting conductor 27 which is provided on the packaging box 21 of FIGS. 2 and 3 is omitted.

As described above, the packaging box 21C with a simpler structure is obtained by omitting the fourth region R4. And, the packaging box 21C does not need the conductive pallet 16 of FIG. 1. That is, a pallet 16B of FIG. 10 need not be conductive. The packaging box 21C can also omit the attachment of the conductive tape in the vertical direction illustrated in FIG. 1.

The packaging boxes 21C are preferably of the same size. The packaging boxes 21C need to be placed in such a manner that polarities of the sides are matched which contact with each other.

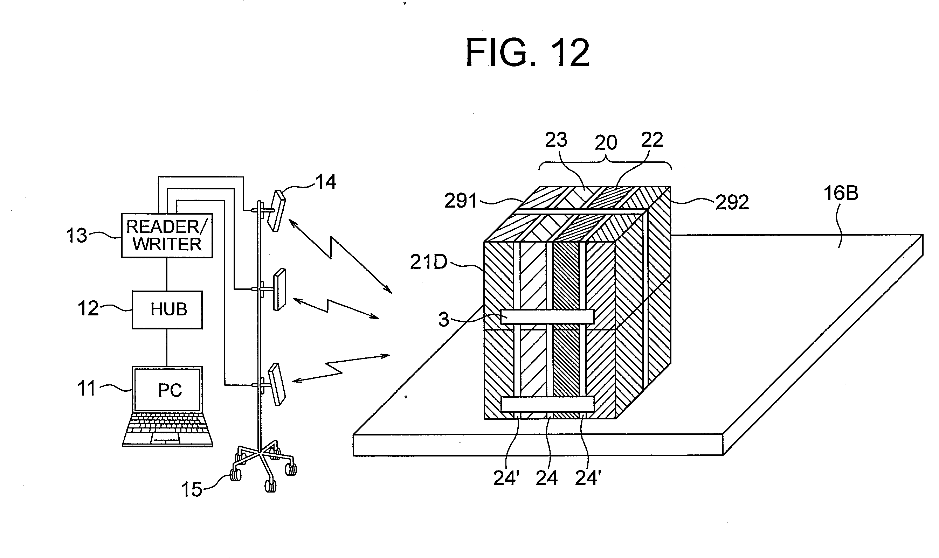

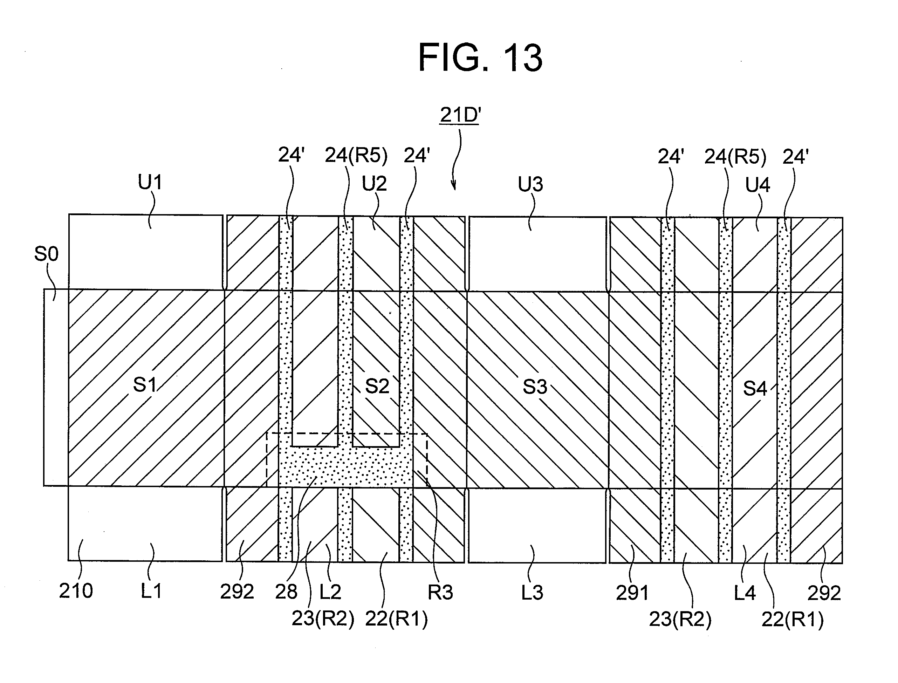

FIG. 12 illustrates a yet another embodiment of the tag ID reading method and a yet another embodiment of the packaging box used for the method. FIG. 13 illustrates a development of a packaging material which is to form the packaging box of FIG. 12.

In this embodiment, instead of the packaging box 21 having the structure illustrated in FIGS. 2 and 3, a packaging box 21D and a packaging material 21D' which have a structure including power feeding means for the RFID tag 3 are used. Specifically, in the packaging box 21D, the two signal conductors 22 and 23 and two power feeding conductors 291 and 292 are provided on each of four parts of the packaging box 21D. The four parts are formed by dividing the packaging box 21D into four in the horizontal direction, respectively, in a case that the packaging box 21D is placed with the base L downside. In other words, as illustrated in FIGS. 12 and 13, the packaging box 21D is provided with the power feeding conductor 291 (+), the signal conductor 23, the signal conductor 22, and the power feeding conductor 292 (-) from the left in the drawings. The RFID tag 3 attached to the packaging box 21D is connected to the power feeding conductor 291 and the power feeding conductor 292. As a result, the RFID tag 3 is supplied with the power.

The insulation regions 24 (the fifth region R5) for insulating the signal conductor 22 from the signal conductor 23 are provided in the vertical direction along with a center line of the packaging box 21D in a case that the packaging box 21D is placed with the base L downside. The fifth regions R5 are provided on the boundaries between the signal conductors 22 and 23 provided on the left side and the right side of the packaging box 21D, respectively. The insulation regions 24', which insulates the two power feeding conductors 291 and 292 from the signal conductors 22 and 23, are provided on the packaging box 21D in the above vertical direction. The third region R3, for which the RFID tag 3 is attached, is provided on and across the regions 24 and 24'. The insulation region 28, for which the RFID tag 3 is attached, is provided in integrated form with the insulation region 24. And, the connecting conductor 27 is omitted.

As described above, the power is supplied to the RFID tag 3 of the packaging box 21D, which cannot receive the radio waves from the reader 13 as the radio waves is blocked. This makes it possible that the tag ID is read even from the packaging box 21D which cannot receive the radio waves.

Ideally, the packaging boxes 21D need to be in the same size. The packaging boxes 21D should be placed in such a manner that polarities of the sides are matched which contact with each other.

## Claims

1. A packaging box comprising:
a body having a top surface, a base and a side;
a first signal conductor provided on a first region on an outside of the body;
a second signal conductor provided on a second region on the outside of the body, and being electrically insulated from the first signal conductor; and
an RFID tag attached to a third region on an outside of the side, being electrically insulated from the first and second signal conductors, and having a first electrode connected to the first signal conductor and a second electrode connected to the second signal conductor.

2. The packaging box according to claim 1, wherein the RFID tag further comprises:
a connection circuit connected to the first and second signal conductors via the first and second electrodes;
a memory circuit storing one or more tag IDs including at least a tag ID of the RFID tag;
an antenna circuit transmitting and receiving a signal to and from a reader; and
a tag ID shared circuit causing the antenna circuit to transmit the one or more tag IDs stored in the memory circuit to the reader.

3. The packaging box according to claim 2, wherein the one or more tag IDs stored in the memory circuit include a tag ID of another RFID tag which is connected via the first and second signal conductor.

4. A packaging material comprising:
a body having faces to be a top surface, a base and a side of a packaging box when the packaging box is set up with the packaging material;
a first signal conductor provided on a first region on faces to be an outside of the packaging box when the packaging box is set up with the packaging material;
a second signal conductor provided on a second region on the faces to be the outside, and being electrically insulated from the first signal conductor; and
a third region provided on a face to be the outside of the side of the packaging box when the packaging box is set up with the packaging material, being electrically insulated from the first and second signal conductors, and being able to attach an RFID tag which has a first electrode connected to the first signal conductor and a second electrode connected to the second signal conductor.

5. A tag ID reading method for reading tag IDs from a plurality of RFID tags by a reader in an aggregate comprising a plurality of packaging boxes piled up, each of the plurality of packaging boxes comprising: a body having a top surface, a base and a side; a first signal conductor provided on a first region on an outside of the body; a second signal conductor provided on a second region on the outside of the body, and being electrically insulated from the first signal conductor; and an RFID tag attached to a third region on an outside of the side, being electrically insulated from the first and second signal conductors, and having a first electrode connected to the first signal conductor and a second electrode connected to the second signal conductor, the method comprising:
transmitting and receiving a tag ID between RFID tags of packaging boxes, the RFID tags having the first and second electrodes thereof which contact with each other among the plurality of packaging boxes;
holding the tag ID at the RFID tag which receives the tag ID from another RFID tag among the plurality of packaging boxes; and
transmitting to a reader one or more tag IDs by an RFID tag which can communicate with the reader, the one or more tag IDs including at least a tag ID of the RFID.

6. A tag ID transmitting program for reading tag IDs from a plurality of RFID tags by a reader in an aggregate comprising a plurality of packaging boxes piled up, each of the plurality of packaging boxes comprising: a body having a top surface, a base and a side; a first signal conductor provided on a first region on an outside of the body; a second signal conductor provided on a second region on the outside of the body, and being electrically insulated from the first signal conductor; and an RFID tag attached to a third region on an outside of the side, being electrically insulated from the first and second signal conductors, and having a first electrode connected to the first signal conductor and a second electrode connected to the second signal conductor, the program causing a computer to execute:
transmitting and receiving a tag ID between RFID tags of packaging boxes, the RFID tags having the first and second electrodes thereof which contact with each other among the plurality of packaging boxes;
holding the tag ID at the RFID tag which receives the tag ID from another RFID tag among the plurality of packaging boxes; and
transmitting to a reader one or more tag IDs by an RFID tag which can communicate with the reader, the one or more tag IDs including at least a tag ID of the RFID.
